# EUROPÄISCHE PATENTSCHRIFT

(11) **EP 0 276 750 B1**
(45) Veröffentlichungstag und Bekanntmachung des Hinweises auf die Patenterteilung: **28.09.1994**
(21) Anmeldenummer: 88100815.5
(22) Anmeldetag: 20.01.1988
(51) Int. Cl.: B24C 9/00, B07B 4/06

(54) **Verfahren und Vorrichtung zum Aufbereiten von Schüttgut, insbesondere Strahlgut**
Method and device for preparing bulk material, in particular abrasive material
Procédé et dispositif pour la préparation de matériaux en vrac, en particulier de grenailles abrasives

(30) Priorität: 23.01.1987 DE 3701988
(43) Veröffentlichungstag der Anmeldung: 03.08.1988
(73) Patentinhaber: LINNHOFF + THESENFITZ MASCHINENBAU GMBH, D-21423 Winsen (DE)
(72) Erfinder: Faehndrich, Wilfried, D-2000 Hamburg 55 (DE)
(74) Vertreter: Walter, Helmut, Dipl.-Ing.

(56) Entgegenhaltungen:
- EP-A- 0 033 009
- EP-A- 0 048 520
- EP-A- 0 158 743
- AU-A- 5 556
- CH-A- 489 333
- US-A- 1 845 441
- US-A- 2 771 189
- US-A- 3 694 964
- US-A- 3 905 898
- US-A- 4 250 024

## Beschreibung

Eine häufig verwendete Technik zum Entfernen alter Farbanstriche von Eisenkonstruktionen ist das Strahlen. Als Strahlgut findet dabei Sand ("Sandstrahlen") oder Kupferschlacke Anwendung. Kupferschlacke fällt bei der Kupfergewinnung an, ist also ein Abfallprodukt, dessen Anwendung in der Strahltechnik darüber hinaus eine Reihe von Vorteilen hat. Wegen dieser Vorteile ist der Bedarf an Kupferschlacke größer als der sich aus der Kupfergewinnung ergebende Anfall an Kupferschlacke. Deshalb ist es üblich, die Kupferschlacke mehrmals zum Einsatz zu bringen, ehe sie verloren gegeben wird. Die Zahl der Wiederverwendungsmöglichkeiten hängt vom Zustand der Kupferschlacke ab, insbesondere ihrer richtigen Körnung, mit zunehmender Zahl der Einsätze aber auch vom Verhältnis zwischen Kupferschlacke und Verunreinigungen. Die Verunreinigung erfolgt nicht ausschließlich, aber doch zu einem großen Teil durch die abgestrahlte Altfarbe. Zu den Verunreinigungen, die nicht Altfarbe sind, gehört, nicht ausschließlich aber überwiegend, Strahlgut, welches durch die Vielzahl der Einsätze, so kleinkörnig geworden ist, daß es als Strahlgut nicht mehr wirksam sein kann. Solange der Anteil an Altfarbe und unbrauchbar gewordenem Strahlgut noch relative gering ist, beeinträchtigt dieser Anteil die Wirksamkeit der Kupferschlacke kaum, bei einem größeren Anteil an Altfarbe und unbrauchbar gewordenem Strahlgut wird jedoch der Strahlvorgang rasch immer weniger effizient, und es kommt der Zeitpunkt, in dem eine nochmalige Verwendung des Gemisches aus noch wirksamem Strahlgut, also insbesondere Kupferschlacke und nicht mehr wirksamem Gutanteil, also insbesondere abgestrahltem Gut, vor allem Altfarbe, unrentabel ist.

Die Erfindung geht von der Überlegung aus, daß die Zahl der möglichen, wiederholten Einsätze des Strahlgutes bei einer effizienten Reinigung erhöht werden könnte, womit erhebliche wirtschaftliche Vorteile verbunden wären.

Voraussetzung für die Nutzung dieses Vorteiles ist ein Verfahren, das es in möglichst effizienter Weise möglich macht, einen für die Erhaltung der Wirksamkeit des Strahlgutes attraktiven Anteil an abgestrahltem bzw. zum Abstrahlen unbrauchbar gewordenem Gut aus dem Gemisch aus Strahlgut und abgestrahltem Gut entfernen zu können, und es ist Aufgabe der Erfindung, ein insofern brauchbares Verfahren aufzuzeigen sowie eine hierfür besonders geeignete Vorrichtung.

Bei der Lösung der Aufgabe geht die Erfindung von der Überlegung aus, daß das Entfernen des abgestrahlten und unbrauchbar gewordenen Gutes aus dem Gemisch aus Strahlgut und abgestrahltem Gut umso einfacher durchgeführt werden kann, je deutlicher verschieden wiederverwendbares Strahlgut und abgestrahltes bzw. unbrauchbar gewordenes Gut sind. Wiederverwendbares Strahlgut und abgestrahltes Gut bzw. unbrauchbar gewordenes Strahlgut sind zwar von Haus aus insoweit deutlich verschieden voneinander, als Strahlgut und abgestrahltes Gut deutlich voneinander verschiedene Festigkeitseigenschaften haben müssen. Um einen alten Farbanstrich von einer Stahlkonstruktion mittels beispielsweise Kupferschlacke abstrahlen zu können, muß das Strahlgut deutlich härter sein als das abzustrahlende Gut, es wird also von Haus aus ein deutlich höheres spezifisches Gewicht als das abgestrahlte Gut haben. Die Praxis zeigt jedoch, daß dieser von Haus aus vorhandene Unterschied in der Praxis wenig genutzt werden kann, weil die Partikel des abgestrahlten Gutes häufig soviel größer als die Partikel des Strahlgutes sind, daß das Partikelgewicht von Strahlgut und abgestrahltem Gut häufig kaum voneinander verschieden ist, was die Trennung des Gemisches in Strahlgut und abgestrahltes Gut erschweren kann. Am zweckmäßigsten wäre es, wenn zumindest ein deutlicher Anteil des abgestrahlten Gutes in der Form eines Pulvers oder Staubes vorläge, weil dann Strahlgut und abgestrahltes Gut in Partikelgröße und Partikelgewicht so deutlich voneinander verschieden wären, daß das pulver- oder staubförmige abgestrahlte Gut relativ einfach aus dem wiederverwendbaren Gemischrest ausgetragen werden könnte. Ähnliches gilt bezüglich des für eine Wiederverwendung zu kleinkörnig gewordenen Strahlgutes, da dieses und das wiederverwendbare Strahlgut zwar gleiches spezifisches Gewicht haben, aber eben auch die absolute Masse der Partikel der verschiedenen Gemischbestandteile eine ähnliche Rolle spielt.

Weitere Aufgabe der Erfindung ist es deshalb, ein Verfahren und eine Vorrichtung aufzuzeigen, die es möglich machen, auf möglichst einfache Weise dem Ziel möglichst nahe zu kommen, wiederverwendbares Strahlgut und Verunreinigungen in der oben verläuterten Art sauber, möglichst weitgehend und auf einfache Weise voneinander zu trennen.

Bei der Lösung dieser Aufgabe geht die Erfindung von der Feststellung aus, daß die beiden Bestandteile des Gemisches aus Strahlgut und abgestrahltem Gut deutlich verschiedene mechanische Festigkeitseigenschaften haben müssen, und sie schlägt vor, daß die Gemischpartikel so lange und so intensiv relative zueinander bewegt werden, bis die weicheren Partikel des abgestrahlten Gutes von den härteren Partikeln des Strahlgutes so weit zerrieben sind, daß ein bezüglich der Eigenschaften des verbleibenden Gemisches interessanter Anteil des abgestrahlten Gutes als Staub bzw. Puder abgeschieden werden kann. In entsprechender Weise wirken dann die wiederverwendbaren Partikel des Strahlgutes auf den nicht mehr wiederverwendbaren Anteil an Strahlgut wegen der unterschiedlichen Masse ein.

Wesentlich ist dabei, daß ein Gleichgewichtszustand in der Weise angestrebt werden kann, daß zwischen zwei Strahlvorgängen ein erfindungsgemäßer Aufbereitungsvorgang eingeschaltet wird, in dem etwa so viel des in dem Gemisch enthaltenen abgestrahlten Gutes zerrieben und als Staub bzw. Puder abgeschieden wird, wie beim nächsten Strahlvorgang neu in das Gemisch gelangt. Auf diese Weise kann ein Strahlgut auf extrem lange Zeit in einem wiederverwendbaren Zustand gehalten werden, und auch diese Aussage schließt nicht mehr nützlich wiederverwendbares Strahlgut ein.

Abgeschieden wird im wesentlichen zu Puder, Staub oder dergleichen zerriebenes abgestrahltes Gut. Da es jedoch nicht vermeidbar ist, daß das Strahlgut selbst bei vielfach wiederholter Verwendung in seiner Korngröße verringert wird, wird Strahlgut, wenn es dem Staub- bzw. Puderzustand weit genug angenähert wird, wie das entsprechend zerriebene abgestrahlte Gut in der anschließenden Klassierung vom wiederzuverwendenden Gemischrest abgeschieden. Entsprechendes gilt für andere Gemischbestandteile. Es bleibt in jedem Fall ein wiederverwendbares Gemisch mit einem wiederverwendbaren Strahlgutanteil, dessen Wirksamkeit beim nächsten Einsatz des im wesentlichen aus Strahlgut bestehenden Gemisches durch unwirksame Verunreinigungen kaum beeinträchtigt ist bzw. über eine Vielzahl von Einsätzen hinweg praktisch konstant gehalten werden kann. Weitere Merkmale des erfindungsgemäßen Verfahrens ergeben sich aus den Patentansprüchen.

Bei der Lösung der Aufgaben geht die Erfindung von der Tatsache aus, daß bereits Verfahren und Vorrichtungen bekannt sind, die unter Verwendung einer liegenden, drehenden Trommel eine Pulverisierung eines Produktes bewirken, das körnig am einen Trommelende in die Trommel eingegeben und als Pulver am anderen Trommelende der Trommel entnommen wird (AU-A-5556). Um diesem Umstand Rechnung zu tragen, ist eine derartige Trommel bereits im Gattungsbegriff des Anspruchs 1 genannt. Die bekannte Lösung dient jedoch einem ganz anderen Zweck als die Erfindung. Es geht dort um die Wiedergewinnung von Metall getrennt von Metalloxid, weshalb das Metalloxid zu Staub vermahlen und der Metalloxidstaub mittels eines Luftstromes aus der Trommel ausgetragen wird, so daß das Metall vom Oxidstaub gereinigt aus der Trommel entnommen werden kann.

Bei der Erfindung geht es demgegenüber um die Trennung zwischen Strahlgut und abgestrahltem Gut, wobei gleichzeitig das Strahlgut von Partikeln zu geringer Masse befreit wird, als daß ein nochmaliger Einsatz als Strahlgut möglich wäre. Abgesehen aber vom anderen Verwendungszweck ist die zum Einsatz kommende Trommel für diesen besonderen Zweck auch besonders ausgestaltet, indem davon ausgegangen werden muß, daß das abgestrahlte Gut überwiegend Farbreste sind, die aufgrund ihrer Masse bzw. ihres Volumens einerseits Schwierigkeiten beim Absondern vom wiederverwendbaren Strahlgut machen. Wenn nachfolgend gesagt ist, daß wesentlicher Aspekt der Erfindung die Anwendung einer Trommel ist und die Trocknung des Gemisches für den Erfolg besonders vorteilhaft ist, so ist das so zu verstehen, daß die Farbreste als wesentliches Teil des abgestrahlten Gutes durch die Trocknung, als Bestandteile eines Partikel-Luftgemisches leicht ausgetragen werden können. Der zu diesem Zweck vorgesehene Brenner erhöht Temperatur und Druck in der Trommel, so daß er letztlich auch der Ausbildung einer Luftströmung innerhalb der Trommel dient.

Bezüglich der erfindungsgemäßen Vorrichtung ist auf US-A-3,905,898 zu verweisen. Am Ende eines vielstufigen Trenn- und Reinigungsverfahrens in Einrichtungen einer entsprechend vielteiligen Anlage wird bereits weitgehend gereinigtes, zur Wiederverwendung bestimmtes Granulat am einen Ende eines mit niedriger Temperatur betriebenen trommelförmigen Drehofens in die Trommel eingegeben und zum anderen Trommelende gefördert, wo sich ein Brenner und ein zu einer Kühleinrichtung führender Gutauslaß befinden. Bei seinem Weg durch die Trommel wird das Granulat mit Hilfe des vom Brenner erzeugten Luftströmung von Reststaub befreit und dieser wird mit der Abluft am Aufgabeende der Trommel ausgetragen, um in einen Filter abgeschieden zu werden. Der für das zur Wiederverwendung bereitstehende Granulat bestimmten Kühleinrichtung ist ein Magnet zugeordnet, um bis zuletzt im Granulat verbliebene Komponenten aus dem zu kühlenden Granulat entfernen zu können. Nach dem Verlassen der Kühleinrichtung steht gekühltes und gereinigtes, wiederverwendbares Granulat zur Verfügung.

Die obengannanten Aufgaben werden mit einem Verfahren gemäß Anspruch 1 bzw. einer Vorrichtung gemäß Anspruch 6 gelöst. Vorteilhafte Weiterbildungen der Erfindung ergeben sich aus den abhängigen Ansprüchen.

Die erfindungsgemäße Vorrichtung ist insbesondere dadurch gekennzeichnet, daß in der rotierenden Trommel die beiden Hauptkomponenten des Gemisches zu Bewegungen relativ zueinander gebracht werden, indem die liegende Trommel dem Gemisch eine Bewegung verleiht, die sich aus zwei Komponenten zusammensetzt, einer Bewegungskomponenten um die Trommellängsachse, die die Drehachse der Trommel ist und einer Bewegungskomponenten entlang der Trommellängsachse, so daß das Gemisch eine sehr intensive Bewegung mit intensiven Bewegungen der Gemischbestandteile relativ zueinander erfährt und das wiederverwendbare Strahlgut in besonders wirksamer Weise auf das abgestrahlte Gut bzw. das unbrauchbar gewordene Strahlgut einwirken kann. Die Trommel ist auch in besonderer Weise dazu geeignet, beheizt zu werden, um das Gemisch zu trocknen, was für das Verfahren und dessen Erfolg besonders vorteilhaft ist.

Nach einem dritten Aspekt der Erfindung sollen die einzelnen Komponenten der Vorrichtung so ausgestaltet und einander zugeordnet sein, daß eine kompakte Gesamtvorrichtung entsteht, die innerhalb der Maße eines genormten Großcontainers (20''-Container) -untergebracht werden kann und entweder in dem Gerüst eines solchen Containers oder in der Gesamtheit eines solchen Containers auch tatsächlich untergebracht wird, so daß eine stapelfähige und entsprechend leicht handhabbare und transportable Einheit vorliegt. Die Einheit kann entsprechenden Transportmitteln, also LKW, Bahn oder Schiff zugeordnet werden, oder selbst als fahrbare Einheit ausgebildet sein. Mehrere soclhe Einheiten sind praktisch beliebig zu Großanlagen zusammenzustellen und wieder voneinander zu trennen.

Die Erfindung ist nachfolgend anhand der Zeichnung näher erläutert. In der Zeichnung ist eine erfindungsgemäße Anlage dargestellt, die insbesondere aber nicht ausschließlich zur Durchführung des erfindungsgemäßen Verfahrens bestimmt ist. In der Zeichnung ist diese Vorrichtung wie folgt dargestellt
- Fig.1: als Seitenansicht,

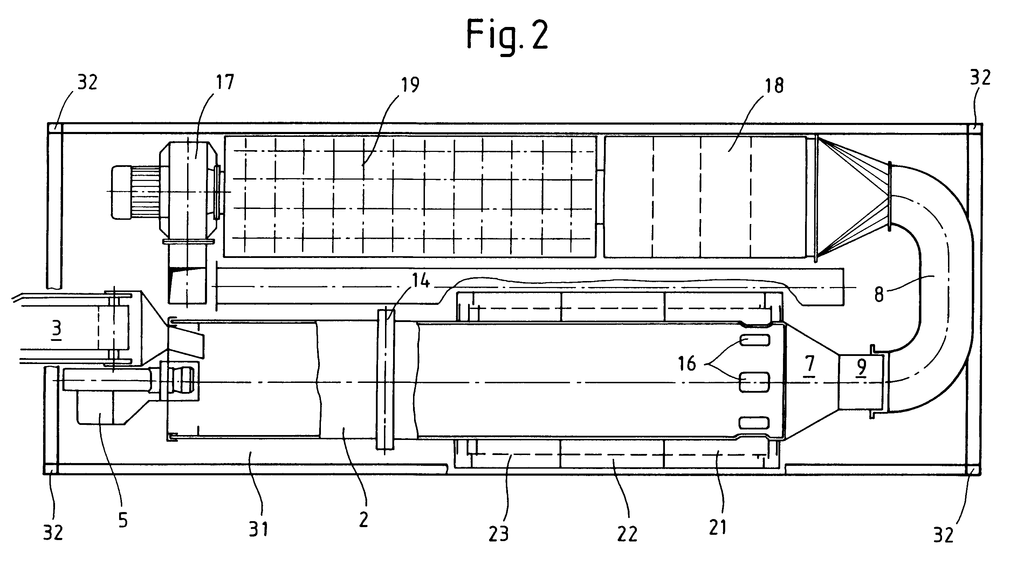

- Fig.2: als Draufsicht,

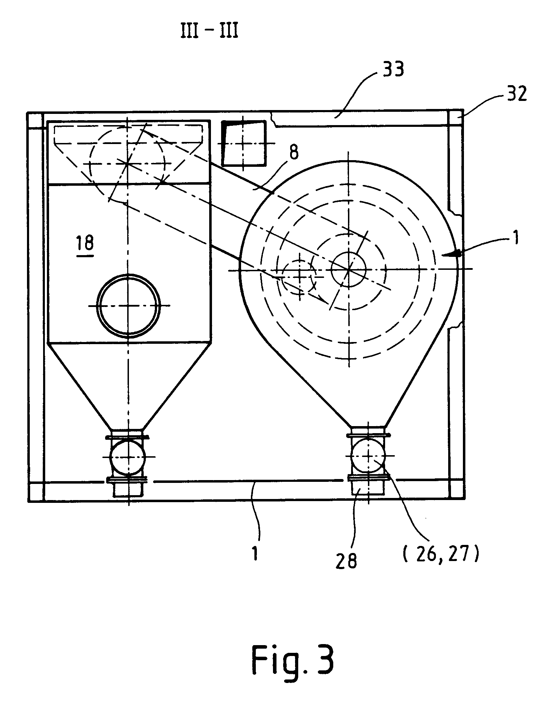

- Fig.3: als Schnitt nach der Linie III-III in Fig.1 und

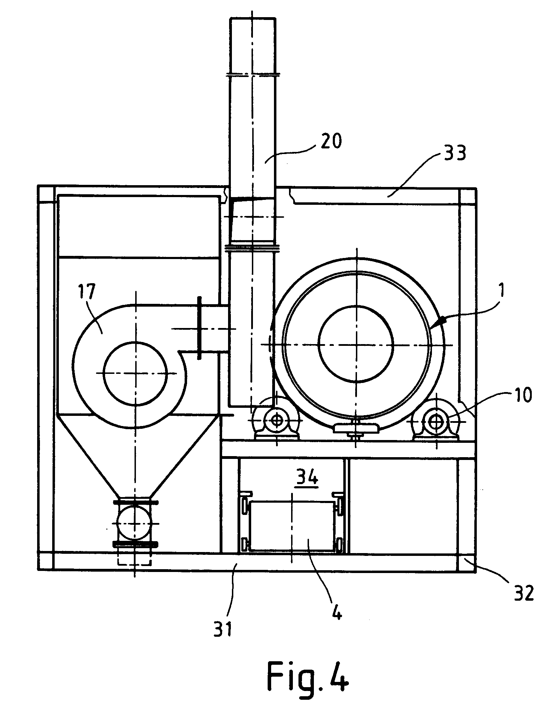

- Fig.4: als Ansicht in Richtung des Pfeiles A in Fig.1.

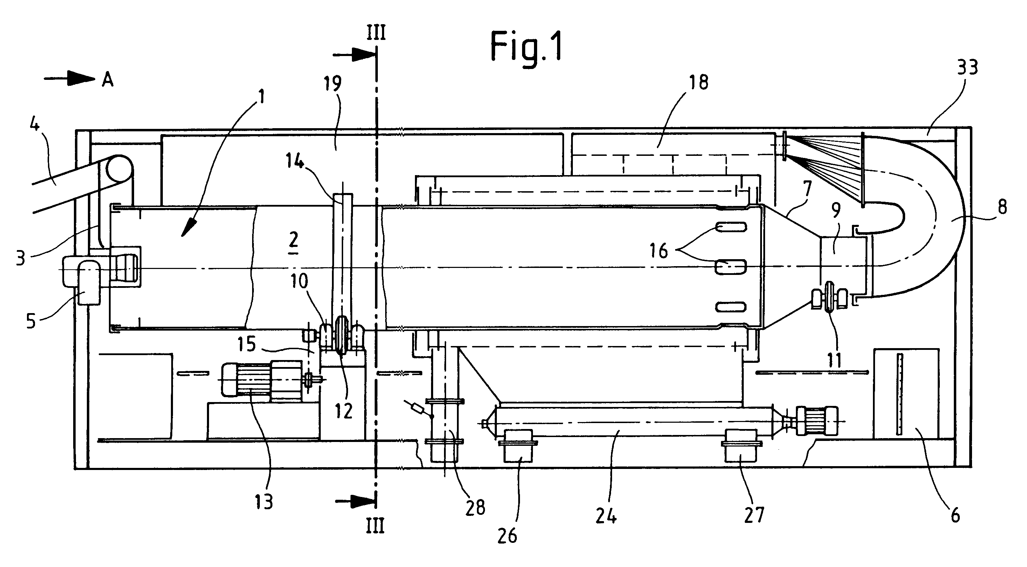

Wesentlicher Bestandteil der erfindungsgemäßen Vorrichtung ist eine in anderem Zusammenhang bekannte sogenannte Sieb-und Trockentrommel 1. Sie weist einen im wesentlichen geschlossenen, liegenden, relativ langen Zylinder 2 auf, der am einen, in Fig.1 linken Bildende über einen Eingabetrichter 3 und eine Eingabevorrichtung 4 mit dem zu behandelnden Gut zu beschicken ist. An diesem Ende ist der Trommel 1 auch ein Ölbrenner 5 zugeordnet, dem der Brennstoff über eine nicht dargestellte Rohrleitung von einem Öltank 6 aus zugeführt wird und der mit der Brennerdüse zentrisch und achsgleich in den Zylinder 2 hineinragt, so daß sich an diesem Zylinderende symmetrisch zur Zylinderlängsachse in dem Zylinder eine etwa kegelförmige Flamme ausbildet, wenn der Brenner im Betrieb ist. An dem dem Brenner 5 abgekehrten Ende verjüngt sich der Zylinder 2 in einem kegelförmigen Endstück 7 zum Querschnitt eines Rohrkrümmers 8, zwischen dem und dem kegelförmigen Endstück 7 ein zylindrischer Stutzen 9 vorgesehen ist, der am Endstück 7 befestigt ist und fluiddicht aber drehbar in den Rohrkrümmer 8 eingeführt ist.

Der Zylinder 2 ist um seine Längsachse drehbar in zwei Lagern 10,11 gelagert, von denen das Lager 11 im Bereich des Stutzens 9 angeordnet ist und das andere näher dem linken Zylinderende sich befindet. Dieses Lager 10 dient gleichzeitig dem Antrieb des Zylinders, weshalb es ein Reibrad 12 aufweist, das zwangsweise von einem Elektromotor 13 angetrieben wird und mit einem um den Zylinder 2 herumgelegten, fest mit ihm verbundenen Reibring 14 zusammenwirkt. Die Kupplung zwischen Elektromotor 13 und Reibrad 12 erfolgt mit einer Kette 15, die um Kettenräder der Abriebswelle des Motors 13 und der Welle des Reibrades 12 herumgeführt ist. Selbstverständlich kann diese Kupplung auch mit einem Zahnradvorgelege erfolgen, und der Reibradantrieb mit Reibrad 12 und Reibring 14 kann durch ein Zahnräderpaar, einen Kettentrieb oder ähnliches ersetzt sein.

Wird ein Gemisch aus wiederverwendbarem Strahlgut, insbesondere Kupferschlacke wegen zu gering gewordener Größe nicht wiederverwendbarem Strahlgut und abgestrahltem Gut, insbesondere alter, von einer Stahlkonstruktion mit dem Strahlgut entfernter Farbe, über die Aufgabevorrichtung mit dem Trichter 3 und der Eingabevorrichtung 4 am linken Ende in den drehenden Zylinder 2 eingegeben, so wird es insbesondere im Bereich des Brenners 5 getrocknet und wandert vom linken zum rechten Ende des Zylinders 2. Dabei wirken die Komponenten Kupferschlacke (Strahlgut) und Farbe (abgestrahltes Gut) aufeinander ein, und die Kupferschlacke pulverisiert die Altfarbe weitgehend. Inwieweit die Altfarbe pulverisiert wird, hängt von den Arbeitsbedingungen, insbesondere aber den Abmessungen der Trommel 1 ab. Durchmesser, Länge und Drehzahl des Zylinders 2 können so aufeinander abgestimmt sein, daß praktisch die gesamte Altfarbe, die mit dem Gemisch aus Altfarbe und Kupferschlacke am linken Ende in den drehenden Zylinder 2 gelangt, pulverisiert ist, wenn das eingegebene Gemisch am rechten Trommelende ankommt. Dies anzustreben, wäre aber im allgemeinen nur mit einem erheblichen Bau- und Betriebsaufwand zu erreichen, so daß es im allgemeinen wirtschaftlicher ist, die Vorrichtung so auszulegen, daß ein wesentlicher Teil der Altfarbe am rechten Ende der Trommel pulverisiert ist. In entsprechender Weise wird wegen zu kleingewordener Korngröße nicht wiederverwendbares Strahlgut weiter kleinkörnig werden und in den Zustand pulverförmig überführt, indem das wiederverwendbare Gut wegen seiner größeren absoluten Masse auf das andere Strahlgut einwirkt.

Am rechten Trommelende erfolgt nun eine Klassierung in pulverisierte Gemischbestandteile und eher grobkörnige Bestandteile. Der pulverisierte Gemischbestandteil ist insbesondere von der Kupferschlacke zerriebene und zerschlagene Altfarbe, aber auch durch eine längere Anwendungsdauer entsprechend pulverisierte Kupferschlacke sowie sonstige Gemischbestandteile, wie bereits mehrfach erwähnt. Der eher grobkörnige Gemischbestandteil ist insbesondere relativ - d.h. im Verhältnis zu Altfarbe harte und abriebfeste Kupferschlacke, aber auch nicht entsprechend zerriebene und zerschlagene Altfarbe sowie sonstige Gemischbestandteile.

Auf den Umfang des Zylinders 2 sind nahe dem rechten Zylinderende Austragöffnungen 16 in der Zylinderwand vorgesehen, die in gleichbleibenden Abständen voneinander auf den Zylinderumfang verteilt sind. Durch sie werden die relativ grobkörnigen Gemischbestandteile in im wesentlichen radialer Richtung aus dem Zylinder ausgetragen. Der Austrag der eher pulverförmigen Gemischbestandteile erfolgt durch das kegelförmige Endstück 7 und den Anschlußstutzen 9 in den Rohrkrümmer 8 mit der Abluft, die infolge der Verbrennung am Brenner 5 durch Überdruck aus dem Zylinder 2 gefördert wird. Um eine bessere Abströmung zu erhalten, ist an den Rohrkrümmer 8 ein elektromotorisch angetriebenes Sauggebläse 17 angeschlossen. Während der Austrag der eher großkörnigen Gemischbestandteile in radialer Richtung durch die Austragöffnungen 16 unter der Einwirkung der Fliehkraft erfolgt, erfolgt der Austrag der eher pulverförmigen Gemischbestandteile in axialer Richtung dadurch, daß sich diese als Schwebeteilchen in der Abluft befinden, die den Zylinder durch den Stutzen 9 verläßt, und zwar mittels des vom Brenner 5 erzeugten Überdruckes und der vom Sauggebläse 17 erzeugten Saugwirkung.

Dieser Klassierung ist sowohl bezüglich der eher pulverförmigen als auch bezüglich der eher grobkörnigen Gemischbestandteile je eine Nachklassierung nachgeschaltet. Die Klassierung der eher pulverförmigen Bestandteile ist zweistufig, weshalb die Abluft mit den Schwebeteilchen der eher pulverförmigen Bestandteile auf dem Weg von dem Rohrkrümmer 8 zu dem Sauggebläse 17 zunächst einem Zyklonabscheider 18 zum Abscheiden der relativ gröberen Bestandteile und dann einem Tuchfilter 19 zum Abscheiden der relativ feineren Bestandteile zugeführt wird. Die so praktisch vollständig gereinigte Abluft wird vom Gebläse 17 in einen Kamin 20 gefördert und gelangt aus diesem ins Freie. Zyklonabscheider 18 und Tuchfilter 19 sind in üblicher Weise reinigungsfähig.

Die Klassierung der eher grobkörnigen Gemischbestandteile erfolgt in einem Ringsieb, das den Zylinder 2 am rechten Ende in einem vorgegebenen radialen Abstand konzentrisch umgibt. Das Ringsieb besteht aus zwei oder mehreren axial aufeinanderfolgenden Siebabschnitten 21,22,23 unterschiedlicher Maschenweite, wobei die Maschenweite beginnend mit dem den Austragöffnungen 16 nächsten Siebabschnitt 21 zum anderen Ende des Trommelsiebes 21,22,23 hin größer wird, so daß zunächst die relativ feineren, dann die relativ größeren Bestandteile abgeschieden werden. Der Austrag der ersten Siebabschnitte 21,22 gelangt in eine Sammelrinne 24 mit eingebauter, von einem Elektromotor 25 angetriebener Förderschnecke in den Bereich von Austragrohren 26,27 mit eingebauter Rückschlagklappe, der Austrag des letzten Siebabschnittes 23 in den Bereich eines dritten Austragrohres 28 ebenfalls mit Rückschlagklappe. Das so klassierte Gut kann im gewollten Mischungsverhältnis erneut einem Strahlprozeß zugeführt werden.

Die Altfarbe sowie der zur Wiederverwendung zu kleinkörnig gewordene Strahlgutanteil ist beim Durchgang durch den Zylinder 2 in dem Anteil pulverisiert und zum Austrag mit der Abluft aufbereitet, daß zwar in den eher grobkörnigen Mischungsbestandteilen beim Austritt aus dem Zylinder 2 durch die Austragsöffnungen 16 noch Reste von Altfarbe enthalten sind, der Anteil an Altfarbe bei mehreren aufeinanderfolgenden Strahlprozessen jedoch nur sehr langsam steigt, das Strahlgut also für eine Vielzahl von aufeinanderfolgenden Strahlzyklen mit nur langsam abnehmender Qualität, d.h. Reinheit einsetzbar gehalten wird.

Die erfindungsgemäße Vorrichtung zur Durchführung des erfindungsgemäßen Verfahrens soll nun als eine gut handhabbare und insbesondere transportable Einheit ausgestaltet sein, um einen weiteren Aspekt der Erfindung aufzuzeigen. Hierzu ist zunächst einmal eine kompakte Bauweise notwendig, wie sie in der Zeichnung dargestellt und oben beschrieben wurde. Die Anordnung der Trommel 1 einerseits und der Filter 18,19 andererseits nebeneinander macht eine für den angestrebten Zweck nützliche relativ lange Bauweise der Trommel möglich, ohne daß die gesamte Vorrichtung dadurch übermäßig breit würde. Die Anordnung der Austragvorrichtungen 26,27,28 für die eher gröberen Gutbestandteile hintereinander und ebenso die Anordnung der Austragvorrichtungen 29,30 für Filter 19 bzw. Zyklon 18 hintereinander sowie die Anordnung dieser beiden Gruppen von Austragvorrichtungen nebeneinander demonstriert die kompakte Bauweise der gesamten Vorrichtung sehr sinnfällig.

Die Abmessungen der gesamten Vorrichtungen sind innerhalb der Maße eines 20''-Normcontainers gehalten. Die Vorrichtung ist zumindest in einem Gerüst eines solchen Containers mit der Bodenplatte 31, den Eckpfosten 32 und der oberen Horizontalaussteifung 33 angeordnet, wobei das Gerüst vorzugsweise noch durch Platten zu einem geschlossenen Container ausgefacht ist. Um alle Bestandteile der Vorrichtung mit dem Container als geschlossene Einheit transportieren zu können, ist die Eingabevorrichtung 4 zum Transport in eine innerhalb des Containers angeordnete Kammer 34 einschiebbar und ist der Schornstein umzulegen. Entsprechende Klappen machen den Container zugänglich. Der Container ist mit den genormten Eckbeschlägen versehen und so mittels Hebezeugen auf einen LKW, einen Waggon oder ein Schiff verladefähig, wobei er mit anderen, in gleicher oder anderer Weise genutzten Behältern zusammen stapelfähig ist. Am Einsatzort wird er vorzugsweise unter Verwendung untersetzbarer Stützen aufgestellt, so daß das aufbereitete bzw. ausgesonderte Gut gut abtransportiert werden kann In den Tank 6 wird der Brennstoff für eine bestimmte Betriebsdauer, beispielsweise einen Tag eingefüllt, und der Elektro-Motor 3 wird an eine Stromversorgung angeschlossen, so daß die Vorrichtung betriebsbereit ist.

Abschließend soll darauf hingewiesen werden, daß die Erfindung bei der Wiederaufbereitung von Strahlgut von besonderer Bedeutung ist, jedocha bei anderem Schüttgut anwendbar ist, wenn entsprechende Verhältnisse gegeben sind.

## Patentansprüche

1. Verfahren zum Reinigen eines von Verunreinigungen in der Art von Farbe verunreinigtem Strahlgutes in der Art von Kupferschlacke unter Verwendung einer liegenden, um die Längsachse drehbaren Trommel (2), in deren eines Ende das verunreinigte Strahlgut eingegeben (Eingabetrichter 3) und an deren anderem Ende Strahlgut und Verunreinigungen getrennt voneinander der Trommel (2) entnommen werden, **dadurch gekennzeichnet**, daß an dem Aufgabeende der Trommel (2) mittels eines Brenners (5) in der Trommel eine Druck- und Temperaturerhöhung erfolgt, daß Durchmesser, Länge und Drehzahl der Trommel so aufeinander abgestimmt sind, daß das im Brennerbereich getrocknete Abstrahlgut und relativ kleine Partikel des Strahlgutes während der Bewegung zum anderen Trommelende, die aus einer radialen und einer longitudinalen Komponente zusammengesetzt ist, vom Strahlgut relativ großer Partikelgröße weitgehend pulverisiert sind und dieses pulverisierte Gemisch als Bestandteil eines Gasstrahles axial aus der Trommel ausgetragen und einer Gasstrahlreinigungseinrichtung (18) zugeführt wird, während der Strahlgutanteil relativ großer Korngröße über auf den Trommelumfang verteilte Austragöffnungen (16) in radialer Richtung aus der Trommel ausgetragen und einer Klassiereinrichtung (21-23) zugeführt wird.

2. Verfahren nach Anspruch 1, **dadurch gekennzeichnet**, daß ein Teil des Strahlgutanteiles relativ großer Korngröße vor seiner Wiederverwendung nochmals zusammen mit dem verunreinigten Strahlgut in die Trommel (2) eingegeben wird.

3. Verfahren nach Anspruch 2**, dadurch gekennzeichnet**, daß der Gemischteil mit zumindest zum größeren Teil gröber körnigem Gut vor der erneuten Zuführung zum ersten Verfahrensschritt zumindest teilweise erneut als Strahlgut eingesetzt wird, um den Anteil an abgestrahltem Gut zunächst wieder zu erhöhen.

4. Verfahren nach Anspruch 3, **dadurch gekennzeichnet**, daß der Anteil an abgestrahltem Gut während des erneuten Einsatzes des Gemischteiles mit zum größeren Teil gröber körnigem Gut etwa auf den Wert gebracht wird, der vor dem ersten Verfahrensschritt im vorausgegangenen Arbeitszyklus vorlag.

5. Verfahren nach einem der Ansprüche 1 bis 4, **gekennzeichnet** durch eine mehrstufige Gasstrahlreinigungseinrichtung (18,19).

6. Vorrichtung zum Reinigen eines von Verunreinigungen in der Art von Farbe verunreinigtem Strahlgutes in der Art von Kupferschlacke mit einer liegenden, um die Längsachse drehbaren Trommel (2), an deren einem Ende eine Aufgabeeinrichtung (3,4) für das noch unbehandelte Gemisch aus Strahlgut und abgestrahltem Gut an deren anderem Ende eine Gutentnahmeeinrichtung (16; 7,8,9) angeordnet sind und der am einen ihrer beiden Enden ein Brenner (5) zugeordnet ist, **dadurch gekennzeichnet**, daß der Brenner (5) am Aufgabeende der Trommel (2) angeordnet ist, daß Durchmesser, Länge und Drehzahl der Trommel so aufeinander abgestimmt sind, daß das im Brennerbereich getrocknete Abstrahlgut und relativ kleine Partikel des Strahlgutes während der Bewegung zum anderen Trommelende, die aus einer radialen und einer longitudinalen Komponente zusammengesetzt ist, vom Strahlgut relativ großer Partikelgröße weitgehend pulverisiert sind und daß für dieses pulverisierte Gemisch als Bestandteil eines Gasstrahles eine axiale Austrageinrichtung (7,8,9) und eine Gasstrahlreinigungseinrichtung (18) angeordnet sind, während für den Strahlgutanteil relativ großer Korngröße auf den Trommelumfang verteilt radiale Austragöffnungen (16) vorgesehen sind und ihnen eine Klassiereinrichtung (21-23) nachgeschaltet ist.

7. Vorrichtung nach Anspruch 6, **dadurch gekennzeichnet**, daß Austragöffnungen (16) in einen Ringraum zwischen der Trommelwand und eine die Trommel achsgleich umgebende Siebtrommel (21-23) münden.

8. Vorrichtung nach Anspruch 7, **dadurch gekennzeichnet**, daß die Siebtrommel mehrere Ringsiebe (21-23) unterschiedlicher Maschenweite einschließt.

9. Vorrichtung nach einem der Ansprüche 6 bis 8, **dadurch gekennzeichnet**, daß die Entnahmevorrichtung mit axialer Austragrichtung ein kegelstumpfförmiger Anschlußstutzen (7) ist, der mit seinem größeren Querschnitt an die Trommel (2) angeschlossen ist und mit dem kleineren Querschnitt in einen Abströmkanal (8,9) mündet.

10. Vorrichtung nach Anspruch 9, **dadurch gekennzeichnet**, daß der Abströmkanal (8,9) in einen Abgaskamin (20) mündet.

11. Vorrichtung nach Anspruch 10, **dadurch gekennzeichnet**, daß der Abströmkanal einen Staubabscheider (18,19) für pulverisiertes Gut enthält.

12. Vorrichtung nach Anspruch 11, **dadurch gekennzeichnet**, daß der Staubabscheider (18,19) zweistufig ist.

13. Vorrichtung nach einem der Ansprüche 6 bis 12, **dadurch gekennzeichnet**, daß der Abströmkanal (8,9) einen Rohrkrümmer (8) aufweist und Trommel (2) und Staubabscheider (18,19) nebeneinander angeordnet sind.

14. Vorrichtung nach einem der Ansprüche 6 bis 13, **gekennzeichnet** durch ihre Anordnung im Gerüst eines stapelfähigen Normcontainers.

15. Vorrichtung nach einem der Ansprüche 6 bis 14, **gekennzeichnet** durch ihre Anordnung in einem stapelfähigen Normcontainer.

## Claims

1. A method of cleaning a blasting material such as copper slag, contaminated by impurities such as paint, using a horizontal drum (2) which is rotatable about the longitudinal axis and into one end of which the contaminated blasting material is introduced (inlet hopper 3) and at the other end of which the blasting material and impurities are removed from the drum (2) separately of one another, characterised in that a pressure and temperature increase is effected in the drum by means of a burner (5) at the charging end of the drum (2), in that the diameter, length and speed of rotation of the drum are so adapted to one another that the blasted-off material dried in the burner zone and relatively small particles of the blasting material are extensively pulverised by blasting material of relatively large particle size during the movement to the other drum end, such movement being made up of a radial component and of a longitudinal component, and the pulverised mixture is removed axially from the drum as a constituent part of a gas jet and is fed to a gas jet cleaning device (18), while the blasting material component of relatively large particle size is removed from the drum radially via removal apertures (16) distributed over the drum periphery, and is fed to a classifier (21 - 23).

2. A method according to claim 1, characterised in that some of the blasting material component of relatively large particle size, before being re-used, is e-introduced into the drum (2) together with the contaminated blasting material.

3. A method according to claim 2, characterised in that before it is again fed to the first stage of the process that part of the mixture which has at least predominantly coarser particulate material is at least partially re-used as blasting material in order initially to increase the blasted-off material component.

4. A method according to claim 3, characterised in that during the re-use of the proportion of the mixture having predominantly coarser particulate material the blasted-off material component is brought substantially to the value it had in the preceding working cycle before the first stage of the process.

5. A method according to any one of claims 1 to 4, characterised by a multi-stage gas jet cleaning device (18, 19).

6. Apparatus for cleaning a blasting material such as copper slag, contaminated by impurities such as paint, comprising a horizontal drum (2) which is rotatable about the longitudinal axis and at one end of which a charging means (3, 4) is disposed for the still untreated mixture of blasting material and blasted-off material while material removal means (16; 7, 8, 9) are disposed at the other end of the drum, a burner (5) being associated with the drum at one of its two ends, characterised in that the burner (5) is disposed at the charging end of the drum (2), in that the diameter, length and speed of rotation of the drum are so adapted to one another that the blasted-off material dried in the burner zone and relatively small particles of the blasting material are extensively pulverised by blasting material of relatively large particle size during the movement to the other drum end, such movement being made up of a radial component and of a longitudinal component, and in that for this pulverised mixture as a constituent part of a gas jet an axial removal means (7, 8, 9) is provided and a gas jet cleaning device (18), while radial removal apertures (16) distributed over the drum periphery are provided for the blasting material component of relatively large particle size and are followed by a classifier (21 - 23).

7. Apparatus according to claim 6, characterised in that the removal apertures (16) lead into an annular chamber between the drum wall and a screening drum (21 - 23) coaxially surrounding the drum.

8. Apparatus according to claim 7, characterised in that the screening drum includes a plurality of annular screens (21 - 23) of different mesh widths.

9. Apparatus according to any one of claims 6 to 8, characterised in that the removal means having an axial direction of removal is a frusto-conical connection (7), the larger cross-section of which is connected to the drum (2) and the smaller cross-section of which leads into an outflow duct (8, 9).

10. Apparatus according to claim 9, characterised in that the outflow duct (8, 9) leads into a waste gas flue (20).

11. Apparatus according to claim 10, characterised in that the outflow duct contains a dust separator (18, 19) for pulverised material.

12. Apparatus according to claim 11, characterised in that the dust separator (18, 19) is a two-stage separator.

13. Apparatus according to any one of claims 6 to 12, characterised in that the outflow duct (8, 9) comprises a pipe bend (8) and the drum (2) and dust separator (18, 19) are disposed side by side.

14. Apparatus according to any one of claims 6 to 13, characterised by being disposed in the framework of a stackable standard container.

15. Apparatus according to any one of claims 6 to 14, characterised by being disposed in a stackable standard container.

## Revendications

1. Procédé de nettoyage de grenailles abrasives, telles que du laitier de cuivre, salies par des impuretés telles que de la peinture, mettant en oeuvre un tambour horizontal (2) qui tourne selon son axe longitudinal, à l'une des extrémités duquel les grenailles abrasives salies sont introduites (entonnoir d'entrée 3), et à l'autre extrémité duquel les grenailles abrasives et les impuretés sortent séparément du tambour (2), **caractérisé en ce qu'**une élévation de pression et de température à l'intérieur du tambour s'effectue à l'extrémité de chargement du tambour (2) au moyen d'un brûleur (5), en ce que le diamètre, la longueur et la vitesse de rotation du tambour sont harmonisés les uns par rapport aux autres, de façon que le produit décapé séché dans la zone du brûleur et des particules relativement fines de grenailles abrasives soient en grande partie pulvérisés par des grenailles abrasives de granulométrie relativement élevée lors de leur déplacement vers l'autre extrémité du tambour, ledit déplacement étant constitué d'une composante radiale et d'une composante longitudinale, et ce mélange pulvérisé faisant partie d'un jet de gaz est évacué axialement hors du tambour et est dirigé vers un dispositif d'épuration de jet de gaz (18), tandis que la fraction de grenailles abrasives de granulométrie relativement élevée est évacuée du tambour dans le sens radial par l'intermédiaire d'ouvertures d'évacuation (16) réparties sur la périphérie du tambour et est dirigée vers un dispositif de tri (21 à 23).

2. Procédé selon la revendication 1, **caractérisé en ce que**, avant d'être réemployée, une partie de la fraction de grenailles abrasives de granulométrie relativement élevée est réintroduite dans le tambour (2) avec les grenailles abrasives salies.

3. Procédé selon la revendication 2, **caractérisé en ce que**, avant d'être réintroduite dans la première étape du procédé, la partie du mélange composée au moins en grande partie de matière granulée grossière est réutilisée au moins partiellement comme grenailles abrasives, afin de réaugmenter d'abord la proportion de produit décapé.

4. Procédé selon la revendication 3, **caractérisé en ce que**, lors du réemploi de la partie du mélange composée au moins en grande partie de matière granulée grossière, la proportion de produit décapé est amenée sensiblement à la valeur qui existait lors du cycle de travail préalable à la première étape du procédé.

5. Procédé selon l'une des revendications 1 à 4, **caractérisé** par un dispositif d'épuration de jet de gaz (18, 19) à plusieurs étages.

6. Dispositif de nettoyage de grenailles abrasives, telles que du laitier de cuivre, salies par des impuretés telles que de la peinture, comprenant un tambour horizontal (2) qui tourne selon son axe longitudinal, à l'une des extrémités duquel est prévu un dispositif de chargement (3, 4) pour le mélange non encore traité constitué de grenailles abrasives et de produit décapé, à l'autre extrémité duquel est prévu un dispositif de déchargement (16 ; 7, 8, 9) et à l'une de ses deux extrémités duquel est associé un brûleur (5) , **caractérisé en ce que** le brûleur (5) est implanté à l'extrémité de chargement du tambour (2), en ce que le diamètre, la longueur et la vitesse de rotation du tambour sont harmonisés les uns par rapport aux autres, de façon que le produit décapé séché dans la zone du brûleur et des particules relativement fines de grenailles abrasives soient en grande partie pulvérisés par des grenailles abrasives de granulométrie relativement élevée lors de leur déplacement vers l'autre extrémité du tambour, ledit déplacement étant constitué d'une composante radiale et d'une composante longitudinale, et en ce que, pour ce mélange pulvérisé faisant partie d'un jet de gaz, sont prévus un dispositif d'évacuation axiale (7, 8, 9) et un dispositif d'épuration de jet de gaz (18), tandis que, pour la fraction de grenailles abrasives de granulométrie relativement élevée, sont prévues des ouvertures d'évacuation radiales (16) réparties sur la périphérie du tambour et qu'un dispositif de tri (21 à 23) est disposé en aval.

7. Dispositif selon la revendication 6, **caractérisé en ce que** les ouvertures d'évacuation (16) débouchent dans la chambre annulaire située entre la paroi du tambour et un tambour tamiseur (21 à 23) qui entoure coaxialement le tambour.

8. Dispositif selon la revendication 7, **caractérisé en ce que** le tambour tamiseur comporte plusieurs tamis annulaires (21 à 23) présentant différentes grosseurs de mailles.

9. Dispositif selon l'une des revendications 6 à 8, **caractérisé en ce que** le dispositif de déchargement à évacuation axiale est un manchon tronconique rapporté (7) dont la plus grande section est reliée au tambour (2) et dont la plus petite section débouche dans un canal de sortie (8, 9).

10. Dispositif selon la revendication 9, **caractérisé en ce que** le canal de sortie (8, 9) débouche dans une cheminée de gaz brûlés (20).

11. Dispositif selon la revendication 10, **caractérisé en ce que** le canal de sortie renferme un séparateur de poussières (18, 19) pour le matériau pulvérise.

12. Dispositif selon la revendication 11, **caractérisé en ce que** le séparateur de poussières (18, 19) comporte deux étages.

13. Dispositif selon l'une des revendications 6 à 12, **caractérisé en ce que** le canal de sortie (8, 9) comporte un tube coudé (8), et le tambour (2) et le séparateur de poussières (18, 19) sont disposés côte à côte.

14. Dispositif selon l'une des revendications 6 à 13, **caractérisé** par son implantation dans l'ossature d'un conteneur normalisé empilable.

15. Dispositif selon l'une des revendications 6 à 14, **caractérisé** par son implantation dans un conteneur normalisé empilable.
